# EUROPEAN PATENT SPECIFICATION

(11) **EP 3 268 514 B1**
(45) Date of publication and mention of the grant of the patent: **20.10.2021**
(21) Application number: 16710304.3
(22) Date of filing: 10.03.2016
(51) Int. Cl.: C25C 7/02, C25C 3/36, C25C 3/26, B01J 2/00, C22B 34/00

(54) **METHOD OF PRODUCING METAL**
VERFAHREN ZUR HERSTELLUNG VON METALL
PROCÉDÉ DE PRODUCTION DE MÉTAL

(30) Priority: 10.03.2015 GB 201504072
(43) Date of publication of application: 17.01.2018
(73) Proprietor: Metalysis Limited, Manvers Way Wath upon Dearne S63 5DB (GB)
(72) Inventor: DEANE, James, North East Lincolnshire DN37 9RE (GB)
(74) Representative: Bates, Alan Douglas Henry
(86) International application number: PCT/GB2016/050660
(87) International publication number: WO 2016/142714

(56) References cited:
- WO-A1-2004/054713
- WO-A1-2014/102223
- US-A- 6 106 803

## Description

The invention relates to a method of producing a feedstock powder and to producing metal by reduction of the feedstock powder. The invention may be particularly advantageous for the production of metallic alloys, for example metallic alloy powders or intermetallic powders.

### Background

The present invention concerns a method of forming a feedstock powder and a method of forming metal by reducing the feedstock powder to form the metal.

In recent years, there has been great interest in the direct production of metal by direct reduction of a solid feedstock, for example, a metal-oxide feedstock. One such direct reduction process is the Cambridge FFC® electro-decomposition process (as described in WO 99/64638). In the FFC process, a solid compound, for example a metal oxide, is arranged in contact with a cathode in an electrolysis cell comprising a fused salt. A potential is applied between the cathode and the anode of the cell such that the compound is reduced. In the FFC process, the potential that produces the solid compound is lower than a deposition potential for a cation from the fused salt.

Other reduction processes for reducing feedstock in the form of a cathodically connected solid non-metal compound have been proposed, such as the polar™ process described in WO 03/076690 and the process described in WO 03/048399. Non-metal compounds such as metal oxides may also be directly reduced by metallothermic processes, for example the molten salt calciothennic process described in EP1445350.

Conventional implementations of the FFC process, and other solid-state electrolytic reduction processes, typically involve the production of a feedstock in the form of a porous preform or precursor, the porous preform being fabricated from a sintered powder of the solid non-metallic compound to be reduced. This porous preform is then painstakingly coupled to a cathode to enable the reduction to take place. Once a number of preforms have been coupled to the cathode, the cathode can be lowered into the molten salt and the preforms can be reduced.

WO 2013/050772 discloses a method for producing metallic powder comprising steps of arranging a volume of feedstock comprising a plurality of non-metallic particles within the electrolysis cell and applying a potential between a cathode and an anode in order to reduce the feedstock to metallic powder. The feedstock powder of WO 2013/050772 is disclosed as being non-metallic particles derived from crushed rock or mineral, or from naturally occurring sand. Typically, the feedstock powder needs to be screened, for example sieved, to select a portion of the non-metallic particles that have a desired mean particle diameter or a desired particle size distribution.

There have been a number of disclosures that metallic alloys may be produced by the direct reduction of a preform comprising more than one different metal oxide. For example, WO 99/64638 discloses the production of a titanium aluminium alloy by reduction of a preform comprising both titanium oxide and aluminium oxide. It may be difficult, however, to prepare preforms with an appropriate stoichiometry over short-range to produce a desired alloy. This may be in part due to the size of some oxide particles or to a disparity in size between some oxide particles of different compositions. For example, titanium dioxide powder is commonly supplied as a fine powder with a low mean particle diameter, typically in the range of 1 to 2 micrometres. Alumina powder, by contrast is typically available with far larger mean particle size, for example in the range 8 to 10 micrometres. Other, less common, metal oxides such as vanadium oxide may only be commercially available in extremely large particle sizes, for example having mean particle diameters in the region of 100 micrometres. This disparity in particle size means it is difficult to distribute alloying elements evenly in a preform in order to form metallic alloys.

The problem is exacerbated where it is desired to produce alloy powders. It may be particularly desirable, for example, to produce metal alloy powders having mean particle diameter within the range 100 micrometres to 250 micrometres, or possibly even smaller than 100 micrometres. It is difficult to produce a Ti-6Al-4V alloy powder, for example, of this desired particle size by reducing a feedstock powder formed by simple agglomeration of titanium oxide, aluminium oxide and vanadium oxide particles. This is due to the large particle size of vanadium oxide particles (approximately 100 micrometres), and the fact that vanadium should only make up 4 wt percent of the resulting Ti-6Al-4V alloy powder.

Preforms of mixed oxides can be obtained by mixing different metal oxide powders with a solvent and carrying out a ball milling procedure. After ball milling the solvent can be evaporated and the remaining powder pressed to form a preform. However, ball milling is a relatively gentle process and preforms produced in this manner are not homogeneous and lack a controlled short range stoichiometry.

### Summary of Invention

The invention provides a method as defined in the appended independent claim 1. Preferred or advantageous features of the invention are set out in various dependent subclaims.

Thus, a method of producing a non-metallic feedstock powder suitable for reduction to metal comprises the steps of combining a liquid with solid metal oxide particles to form a mixture, subjecting the mixture to high-shear mixing to form a liquid suspension of metal oxide and the liquid, and drying the liquid suspension using a fluidised-bed spray-granulation process to grow a plurality particles to form the non-metallic feedstock powder. The spray-granulation process grows a plurality of feedstock particles, layer by layer, to a predetermined mean particle diameter.

The liquid that is combined with metal oxide particles to form the mixture may advantageously comprise water and an organic binder, for example an aqueous solution of polyvinyl alcohol (PVA). Many other suitable binders are known. For example, a suitable binder may comprise polyvinylpyrrolidone (PVP) or hydroxyyethylcellulose (HEC). By subjecting the mixture of liquid and metal oxide particles to a high-shear mixing process, the metal oxide particles may be milled to a similar degree of fineness irrespective of any large variations in particle size that may exist prior to high-shear mixing. That is, if there is a wide particle size distribution in the metal oxide particles that are combined with a liquid to form the mixture then the process of high-shear mixing may advantageously mill the particles such that the overall mean particle diameter decreases and the overall particle size distribution becomes narrower. By forming a liquid suspension containing a uniform distribution of fine metal oxide particles it is, advantageously, possible to use spray-granulation techniques to grow particles to form a feedstock powder to a predetermined mean particle diameter.

The ratio of liquid to metal oxide powder in the mixture may be varied. It is preferred, however, that the mixture is between 50 weight % and 70 weight % metal oxide, with the remainder being the liquid. At greater than 70 weight % of oxide loading it may be difficult to generate high-shear mixing sufficient to form a homogenised liquid suspension. Suspensions that are formed with greater than 70 % loading are difficult to pump to the spray granulation apparatus. At lower than 50 weight % of oxide loading the time taken to build up feedstock particles may be excessive. At lower oxide loadings the particles produced may be more spherical. Thus, it may be advantageous to maintain the oxide loading to between 50 weight % and 60 weight % of the mixture, or between 50 weight % and 55 weight % of the mixture.

The step of drying the liquid suspension may comprise steps of spraying a portion of the liquid suspension into a heated chamber of a fluidised-bed spray-granulation apparatus such that liquid is removed from individual droplets of the suspension to form a plurality of seed particles, maintaining the plurality of seed particles within the heated chamber by means of a fluidising gas stream, and spraying further portions of the liquid suspension into the heated chamber, droplets of the liquid suspension successively adsorbing to and drying on the plurality of seed particles. By this means a plurality of feedstock particles may be grown, layer-by-layer, to a predetermined particle size.

Fluidised-bed, spray-granulation processes are known, and have particular application in the pharmaceutical industry. When a liquid feed is sprayed into a chamber it is dried to form a seed particle or germ particle. This germ particle is maintained within by a fluidising gas flow. As further liquid feed is sprayed into the chamber it builds up layer-upon-iayer on the seed particle. The seed particle grows larger, forming an onion-like structure. A substantially spherical particle is formed. The particles grow until they are too large to be maintained within the fluidised gas stream, after which they drop out of the bottom of the heated chamber. The resultant particle is dry, substantially spherical, and non-dusting.

Process parameters that may be controlled include the fluidising airflow rate and air temperature (inlet temperature). For the purposes of this invention it may be preferred that airflow during spray granulations falls between about 100 and 190 m³ per hour, preferably between 130 and 170 m³ per hour. For the purposes of this invention it may be preferred that the air temperature is between 120°C and 190°C, preferably between 130°C and 150°C.

The control of process parameters allows granules of predetermined mean particle diameter within the range of about 10 micrometres to about 10 millimetres to be produced. Different parameters may need to be selected to form particles of the same particle size using oxides that have different densities. The high degree of control of such processes allows final particle size and particle size distribution to be controlled within extremely close tolerances. Furthermore, process yields may be substantially in excess of 90%. For example, yields in excess of 95% or 98% are achievable when the process is continuously operated.

Control over the mean particle diameter may allow the formation of non-metallic feedstock powders of specific sizes to produce metallic powders having specific powder properties. WO2014/068267 discusses the production of a metallic powder having specific powder properties for use in specific powder metallurgy processes.

Preferred metallic powder size ranges following reduction of the feedstock may vary depending on the desired end use of the metallic powder. For example, the following provides an indication of the ranges that are typically preferred for different powder metallurgy processes. In each case, the lower value of the range indicated the D10 particle size and the upper value of the range represents the D90 particle size.

Metal injection moulding (MIM) - particle size range between 5 and 30 microns.
Gas dynamic cold spray (GDCS) - particle size range between 15 and 45 microns.
Selective laser melting (SLM) - particle size range between 20 and 50 microns.
Electron beam melting (EBM) - particle size range between 50 and 100 microns.
Laser metal deposition (LMD) - particle size range between 50 and 125 microns.
Cold isostatic pressing (CIP) - particle size range between 45 and 150 microns.
Hot isostatic pressing (HIP) - particle size range between 45 and 200 microns.

The actual particle size range of a powder for use in any of the identified processes above may vary outside the stated ranges. These figures are provided as a guideline indicating the preferred or ideal particle size ranges for metal powders used in these processes.

An advantage of the spray-granulation process is that it is possible to form substantially spherical feedstock particles. A powder formed from a plurality of such particles may be reduced to a metallic powder of substantially spherical metal particles. Substantially spherical particles are rounded rather than angular and have a low aspect ratio between x, y, and z axes. The aspect ratio is approximately 1:1:1. Spherical metallic powder particles are advantageous in many powder processing technologies. Currently spherical metallic powders are only produced by processes such as atomisation or spheroidisation of metallic particles. The feedstock powder disclosed herein may advantageously be directly reduced to produce a metallic powder consisting of a plurality of substantially spherical metallic powder particles.

The method may be particularly advantageous in the formation of alloy metals and alloy metal powders. For the purposes of this application intermetallics are considered to be alloys. Thus, a first set of metal oxide particles and a second set of metal oxide particles may be combined with the liquid to form the mixture. The first set of metal oxide particles have a different composition to the second set of metal oxide particles. Preferably, the first set of metal oxide particles comprises a first metal oxide and the second set of metal oxide particles comprises a second metal oxide, the first metal being a different metal to the second metal. The high-shear mixing of the mixture may cause the different sets of metal oxide particles to be milled to a fine particle size, for example a mean particle diameter of less than 2 micrometres. The liquid suspension formed by the high-shear process comprises metal oxides of uniform fineness. Furthermore, there is a uniform distribution of each different metal oxide. By controlling the ratio of the first set of metal oxide particles and the second set of metal oxide particles it may be possible to control the stoichiometry of the feedstock powder formed using the method. The different metal oxide particles are evenly distributed within the feedstock powder produced and it may be possible to achieve short range stoichiometry.

Advantageously, the process may be applied to particles in which the first set of metal oxide particles and the second set of metal oxide particles have substantially different mean particle sizes. The first set of metal oxide particles and the second set of metal oxide particles may have mean particle sizes that differ by greater than a factor of 2. For example, the first set of metal oxide particles may have a mean particle diameter of 5 micrometres and the second set of metal oxide particles may have a mean particle diameter of 10 micrometres. It may be that the first set of metal oxide particles and the second set of metal oxide particles have mean particle diameters that differ by greater than a factor of 10. It may be that the first set of metal oxide particles and the second set of metal oxide particles have a mean particle size that differ by greater than a factor of 100. Whenever there is a large disparity in particle sizes between two or more sets of mixed particles it is difficult to produce a feedstock of substantially uniform particle size without losing a significant amount of material. The same issue arises where a single set of particles has a wide particle size distribution. The proposed process addresses these issues and enables the controllable formation of a feedstock powder consisting of substantially even-sized powder particles.

Feedstock powders comprising complicated metal oxide compositions may be produced by mixing more than two sets of different metal oxide particles and processing them as described above. For example, the method of producing feedstock powder may comprise mixing three or more sets of metal oxide particles, each of the three or more sets having a different composition. It may be desirable, to form a mixture comprising the liquid, a set of titanium dioxide particles having a mean particle diameter of less than 2 micrometres, a set of alumina particles having a mean particle diameter of about 8 micrometres, and a vanadium pentoxide powder having a mean particle diameter about 100 micrometres. Advantageously, the method disclosed herein may allow the formation of a feedstock consisting of substantially spherical particles having a uniform distribution of each of these three oxides. Such a feedstock may be used to form a titanium-aluminium-vanadium alloy.

It may be advantageous that the metal oxide particles that are combined with the liquid to form the mixture are synthetic or refined metal oxide particles. Such particles are typically agglomerations of much finer particles. For example, a vanadium oxide powder particle having a diameter of 100 micrometres may be an agglomeration of much finer sub-particles having particle diameters of, for example, less than 1 micrometre. Such particles may be efficiently milled using a high-shear mixing process.

The feedstock powder is preferably grown to a predetermined mean particle diameter. The predetermined mean particle diameter of the feedstock powder may be anywhere within the range of 10 micrometres to 10 millimetres. Preferable ranges may be between 50 micrometres and 5 millimetres, for example between 50 micrometres and 200 micrometres. Advantageously, the process for forming the feedstock powder may be controlled such that the feedstock powder has a narrow particle size distribution. For example, the width of the particle size distribution may be less than 100 micrometres between a D10 diameter and a D90 diameter. For example, the particle size distribution may be 50 micrometres or less.

Mean particle diameter or mean particle size may be determined by a number of different techniques. For example, mean particle diameter (mean particle size) may be determined by sieving, laser diffraction, dynamic light scattering or image analysis. While the exact value of the mean particle diameter of a powder particle may differ slightly depending on the measurement technique used to determine the mean value, in practice the values will be of the same order providing the particles do not have an excessively high aspect ratio. For example, the skilled person will appreciate that the same powder may be found to have a mean particle diameter of, say, 150 micrometres if analysed by sieving, but 142 micrometres if analysed by a different technique such as laser diffraction. A preferable technique for determining mean particle diameter is laser diffraction. For example, mean particle diameters may be determined using an analyser such as the Malvern Mastersizer Hydro 2000 MU. Such an analyser may also be used to determine particle size range or particle size distribution.

One standard way of defining particle size distribution in a powder is to refer to D10 and D90 values. D10 is the particle size value that 10% of the population of particles lies below. D90 is the particle size value that 90% of the population lies below. A feedstock powder that has a wide particle size distribution will have a large difference between D10 and D90 values. Likewise, a feedstock powder that has a narrow particle size distribution will have a small difference between D10 and D90 values.

The step of high-shear mixing may preferably be performed in a high-shear mixer having a rotor capable of rotating in excess of 5000 rpm, for example in excess of 6000 rpm or about 6500 rpm. The rotor rotates relative to a stator in a tank containing the mixture. That is, the rotor and stator are in a tank containing the mixture of the liquid and the metal oxide particles. The difference in the velocity of liquid near the tip of the rotor and liquid adjacent the stator causes an extremely high-shear zone in the liquid. This high-shear mills the metal oxide particles in the liquid and forms a suspension of metal oxide and the liquid.

A wide range of high-shear mixers are readily available on the market. For example, small volumes may be processed by high-shear mixing using an IKA G45 M dispersing mixer.

Preferably, the dried particles derived from the spray granulator are heat treated prior to being reduced to metal. Heat treatment by means of a suitable firing process may remove any traces of organic binder that remain on each individual particle. The loss of organic binder may introduce a degree of porosity to the particle, and this porosity may be particularly advantageous in some methods of reducing the particles to metal, for instance electrolytic reduction methods involving a molten salt. For example, the feedstock powder may comprise a plurality of particles, the particles having a porosity of between 5% and 50%, for example from 10 to 30%. In other words, individual particles may have porosity of between 5% and 50%. Heat treatment may also impart a degree of mechanical strength to each particle.

It may be advantageous to heat treat, or fire, the particles at a relatively high temperature in order to produce a homogenised mixed metal oxide particle. Thus, the metal oxide particles of the feedstock powder may each be a homogenised mixed metal oxide particle having both a predetermined particle size and a predetermined stoichiometry of metallic elements. Thus, the feedstock powder may be reduced to form a homogeneous metal alloy having a predetermined alloy composition. Thus, it may be desired to heat treat the feedstock particles at a temperature of greater 900°C, for example at between about 1000°C to 1400°C.

A method of producing metal may comprise the steps of forming a non-metallic feedstock using a method as described herein and reducing the non-metallic feedstock powder to form the metal. The feedstock powder may be directly reduced to metal as a powder, or may be formed into a preform for subsequent reduction. Preferably the feedstock powder is directly reduced as a powder to form a metallic powder. The feedstock powder may be reduced by any suitable method, for example by metallothermic reduction.

it may be preferable to reduce the feedstock powder by means of electrolytic reduction of the feedstock powder in contact with the molten salt. For example, a volume of the feedstock powder may be arranged within an electrolysis cell comprising molten salt and a potential may be applied between an anode and a cathode in order to reduce the feedstock to metal. It may be particularly preferred that the reduction of the feedstock powder is effected by use of the FFC process wherein the feedstock powder is brought into contact with a cathode and a molten salt in an electrolysis cell and a potential is applied between the cathode and the anode such that the feedstock is reduced.

A method for producing metallic powder may comprise the steps of arranging a cathode and an anode in contact with a molten salt within an electrolysis cell, an upper surface of the cathode supporting a volume of the non-metallic feedstock, and a lower surface of the anode being vertically spaced from the feedstock and the cathode, and applying a potential between the cathode and the anode such that the feedstock is reduced to a plurality of discrete metal particles.

Some reduction processes may only operate when a molten salt or electrolyte used in the process comprises a metallic species (a reactive metal) that forms a more stable oxide than the metallic oxide or compound being reduced. Such information is readily available in the form of thermodynamic data, specifically Gibbs free energy data, and may be conveniently determined from a standard Ellingham diagram or predominance diagram or Gibbs free energy diagram. Thermodynamic data on oxide stability and Ellingham diagrams are available to, and understood by, electrochemists and extractive metallurgists (the skilled person in this case would be well aware of such data and information).

Thus, a preferred electrolyte for an electrolytic reduction process may comprise a calcium salt. Calcium forms a more stable oxide than most other metals and may therefore act to facilitate reduction of any metal oxide that is less stable than calcium oxide. In other cases, salts containing other reactive metals may be used. For example, a reduction process according to any aspect of the invention described herein may be performed using a salt comprising lithium, sodium, potassium, rubidium, caesium, magnesium, calcium, strontium, barium, or yttrium. Chlorides or other salts may be used, including mixture of chlorides or other salts.

By selecting an appropriate electrolyte, almost any metal oxide particles may be capable of reduction using the methods and apparatuses described herein. Naturally occurring minerals containing one or more such oxides may also be reduced. In particular, oxides of beryllium, boron, magnesium, aluminium, silicon, scandium, titanium, vanadium, chromium, manganese, iron, cobalt, nickel, copper, zinc, germanium, yttrium, zirconium, niobium, molybdenum, hafnium, tantalum, tungsten, and the lanthanides including lanthanum, cerium, praseodymium, neodymium, samarium, may be reduced, preferably using a molten salt comprising calcium chloride.

The skilled person would be capable of selecting an appropriate electrolyte in which to reduce a particular metal oxide, and in the majority of cases an electrolyte comprising calcium chloride will be suitable.

In a particularly advantageous embodiment, a metal produced may be a titanium-aluminium-vanadium alloy. Particles of titanium oxide, aluminium oxide and vanadium oxide may be combined with the liquid in an appropriate ratio to form the mixture which is then subjected to high-shear mixing to form a uniform suspension of the different metal oxides in the liquid. The reduction of the feedstock powder thus formed is a titanium-aluminium-vanadium alloy of a predetermined composition.

A feedstock powder suitable for reduction to a metal may also be provided. The feedstock powder may comprise a plurality of feedstock particles having a predetermined mean particle diameter. It is preferred that the feedstock powder consists of substantially spherical particles. The feedstock powder is formed by a process as described above. The feedstock powder may have a mean particle diameter of between 50 micrometres and 500 micrometres, for example between 100 micrometres and 250 micrometres.

In one embodiment the feedstock powder may comprise titanium oxide and at least one further metal oxide. The at least one further metal oxide may be aluminium oxide and/or vanadium oxide and/or niobium oxide, and/or chromium oxide. The titanium alloy powder formed may have a composition of or close to Ti-6Al-4V. The titanium alloy powder formed may have a composition of or close to Ti-6Al-6V-2Sn.

In one embodiment the feedstock powder may comprise tantalum oxide and at least one further metal oxide. The at least one further metal oxide may be aluminium oxide and/or tungsten oxide and/or titanium oxide.

The step of drying liquid suspension may comprise the further steps of spraying a portion of the liquid suspension into a heated chamber of a fluidised-bed spray granulation apparatus such that liquid is removed from individual droplets of the suspension to form a plurality of seed particles, maintaining the plurality of seed particles within the heated chamber by means of a fluidising gas stream, and spraying further portions of the liquid suspension into the heated chamber, droplets of the liquid suspension successively adsorbing to and drying on the plurality of seed particles, thereby growing the plurality of feedstock particles.

Any additional processing features for forming the feedstock powder as disclosed above may be combined herein with this aspect of the invention of a feedstock powder.

The feedstock powder may be suitable for reduction to form a metallic alloy, for example a metallic alloy powder. Advantageously each non-metallic particle may be a solid solution mixed oxide. Such an oxide may reduce to form a metallic alloy particle with a homogenous distribution of metallic elements, The feedstock powder may be suitable for reduction to a Ti-Al-V alloy, the feedstock powder comprising Titanium, Aluminium, Vanadium, and Oxygen.

The feedstock powder may be a homogenised mixed oxide powder. The feedstock powder may comprise titanium, aluminium and vanadium, along with oxygen, and the ratio of the metallic elements in the oxide powder may be between 5.5 wt% and 8 wt% aluminium, between 3.5 wt% and 6 wt% vanadium with the remainder being titanium.

Depending of the composition, the feedstock powder may be suitable for reduction to a titanium-aluminide alloy powder or a titanium-tantalum alloy powder or a tantalum-tungsten alloy powder or a tantalum-aluminium alloy powder.

Titanium aluminide (48Ti-48Al-2Nb-2Cr) is a high temperature titanium intermetallic used in turbines, specifically aerospace.

Titanium tantalum (70Ti-30Ta) is a bio-medical alloy, used in dental applications for example.

Tantalum tungsten (Ta-2.5W) exhibits excellent corrosion resistance at elevated temperatures, and is used in chemical industries in piping for example.

Tantalum aluminium is a potential capacitor material. The combination allows the di-electric constant to be higher than tantalum alone, hence offers a higher capacitance.

### Embodiments of the Invention

Specific embodiments of one or more aspects of the invention will now be described with reference to figures in which;
Figure 1 is a schematic diagram illustrating a high-shear mixing apparatus suitable for use in an embodiment of the invention,
Figure 2 is a schematic diagram illustrating a fluidised-bed spray-granulation apparatus that may be used in embodiments of the invention,
Figure 3 is a schematic diagram illustrating the formation of feedstock powder particles using a spray-granuiation process,
Figure 4 is a micrograph illustrating particles of a feedstock powder formed using an embodiment of the invention,
Figure 5 is an electron micrograph of a portion of the powder of Figure 4,
Figures 6, 7 and 8 are energy dispersive x-ray spectroscopy (EDS) element maps showing the distribution of aluminium (Figure 6), vanadium (Figure 7), and titanium (Figure 8) over the area depicted in the micrograph of Figure 5,
Figure 9 is a schematic diagram illustrating an electrolysis apparatus arranged to reduce a feedstock powder according to an embodiment of the invention,
Figure 10 is a schematic cross-sectional view illustrating additional detail of the cathode structure of the electrolysis apparatus of Figure 9,
Figure 11 is a plan view of the cathode illustrated in Figure 10, and
Figure 12 is a SEM micrograph of a Ti-Al-V alloy powder particle produced by reducing the feedstock powder of Figure 4.

The invention relates to a method of forming a feedstock powder and comprising the step of reducing a feedstock powder formed by the method. The method of forming the feedstock powder includes steps of combining a liquid and metal oxide particles to form a mixture, the mixture preferably having an oxide proportion of between 50% and 70% by weight, subjecting that mixture to high-shear mixing to form a liquid suspension, and drying the liquid suspension using a fluidised-bed spray-granulation process. The process is of high-shear mixing and fiuidised-bed spray-granuiation and will now be discussed in general terms.

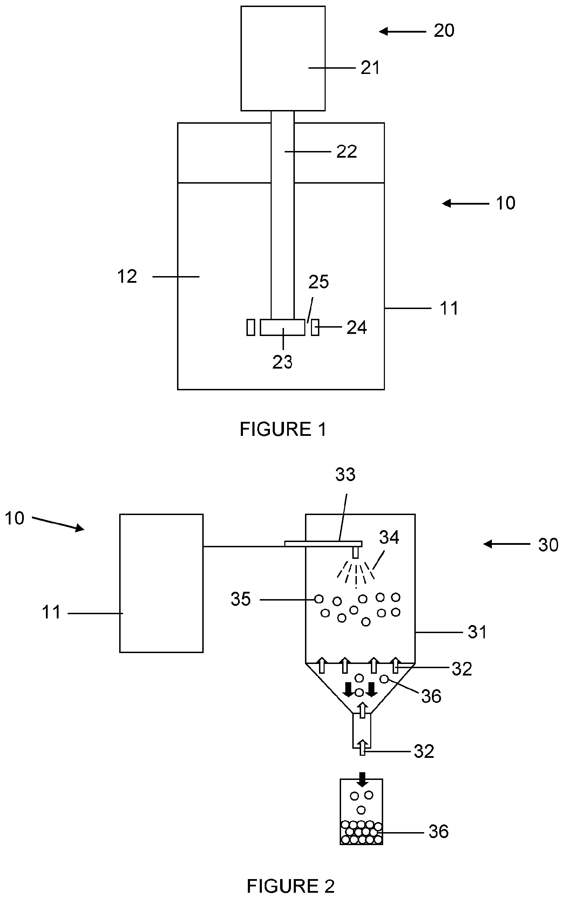

Figure 1 is a schematic illustration of a high-shear mixing apparatus 10 that may be suitable for forming the liquid suspension in embodiments of the invention. The high-shear mixing apparatus 10 comprises a tank 11 containing a mixture of liquid and metal oxide particles 12. A high-shear mixer 20 is arranged in contact with the liquid mixture 12. The high-shear mixer includes a motor 21, a connecting shaft 22, a rotor 23 and a stator 24. The rotor 23 is separated from the stator 24 by a narrow gap 25. In use, the motor 21 causes the rotor 23 to rotate at speeds of typically between 5000 rpm and 10000 rpm. As the rotor rotates the stator remains static and the differences in velocity of the liquid in the region of the rotor and the stator result in high-shear within the liquid.
Typically the liquid mixture 12 consists of an aqueous solution of a binder, such as polyvinyl alcohol (PVA), and a proportion of metal oxide particles. The high-shear forces set up in the liquid mixture 12 cause milling of the metal oxide particles. Various parameters may be altered to influence the final particle size of the milled oxide. For example, parameters such as rotational speed of the rotor 23, distance of the gap 25 between the rotor and the stator, and proportion of metal oxide to liquid in the liquid mixture 12, as well as mixing time, may all be varied to influence the particle size of the metal oxide resulting from the high-shear mixing process. The high-shear mixing forms a suspension of finely milled metal oxide particles in a liquid, for example, an aqueous solution of PVA.

A range of suitable high-shear mixers or batch mixers are known and commercially available. For example, IKA® manufacture a wide range of batch mixers for forming suspensions of pharmaceutical products. These high-shear mixers may be suitable for use in embodiments of the present invention.

Figure 2 is a schematic illustration of a fluidised-bed spray-granulation apparatus 30. The apparatus includes a heated chamber through which an upwardly directed stream of hot air 32 is passed. A nozzle 33 allows droplets of a liquid suspension 34 to be injected into the heated chamber 31. The droplets of the liquid suspension 34 may be supplied directly from a high-shear mixing apparatus 10 or may be transferred to a separate holding tank prior to injection. Once in the heated chamber 31 the droplets of liquid suspension 34 are dried and form solid particles 35. These solid particles 35 are maintained within the heated chamber 31 by the fluidising action of the heated airstream 32. As further droplets of liquid suspension 34 are injected into the heated chamber 31 they adsorb to existing particles 35 and dry, thereby increasing the diameter of the particles 35. As the particles grow, they eventually reach a mass that is too great for them to remain in a fluidised state within the chamber. Once the particles reach this diameter they drop towards the bottom of the chamber and are collected.

The size, shape, and mass of the collected particles 36 and the size distribution of the collected particles 36 can be influenced by controlling parameters such as oxide loading of the liquid suspension, injection pressure and initial droplet size, and flow rate of the fluidising airflow.

The use of spray-granulation technology enables a large degree of flexibility in controlling particle sizes and particle size distributions. Through control and optimisation of the process parameters, particle sizes within a range of 10 micrometres to 10 millimetres may be achieved. The system has the advantage that any undersize particles that have passed through the spray-granulator may be returned to the heated chamber 31 for further growth. Furthermore, any oversize particles may be returned to the high-shear mixer. Thus, process yields should comfortably exceed 90%, and preferably exceed 95%, or exceed 98%,

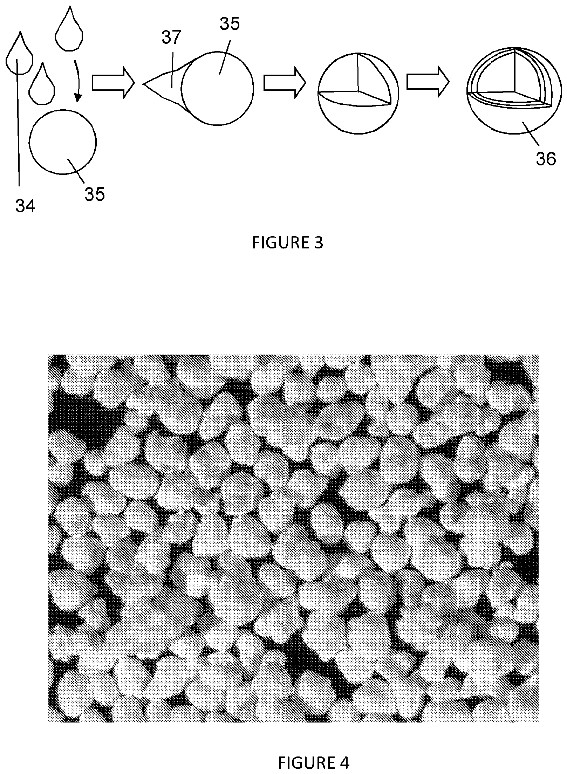

Figure 3 is an illustration depicting the growth of particles within a fluidised-bed spray-granulation apparatus. Droplets of the liquid suspension 34, once injected into the heated chamber of the spray-granulation apparatus, swiftly dry to form small seed particles 35. As discussed in relation to Figure 2, these seed particles 35 are fluidised by a stream of heated air. Subsequent droplets of the liquid suspension 37 adsorb to the surface of the seed particles 35. These additional liquid droplets swiftly coat the surface of the seed particle and dry to add a layer of thickness to the seed particle. Over a period of time, more and more droplets adsorb to the surface of the fluidised particles and form a layered, onion-like, particle 36. Figure 3 illustrates a cutaway of a fully formed particle 36 showing the layered structure.

Once the particles have reached the predetermined particle size they are collected from the spray-granulation apparatus. It is then preferable that the particles are heat treated in order to drive off any remaining binder from the particles and to provide some mechanical stability. A heat treatment may also have the result that the composition of the particles is homogenised. Thus, the collected particles 36 may be subjected to a heat treatment regime. The heat treatment may be a two-step regime comprising, for example, heating to 500°C and holding for a period of time followed by heating to 1000°C and holding for a further period of time.

After the particles have been collected and, if required, heat treated, the feedstock powder may be reduced to form metal. Preferably the feedstock powder is directly reduced in powder form to produce a metallic powder. It may be desirable, however, to form the feedstock powder into a preform shape or pellet prior to reduction to metal.

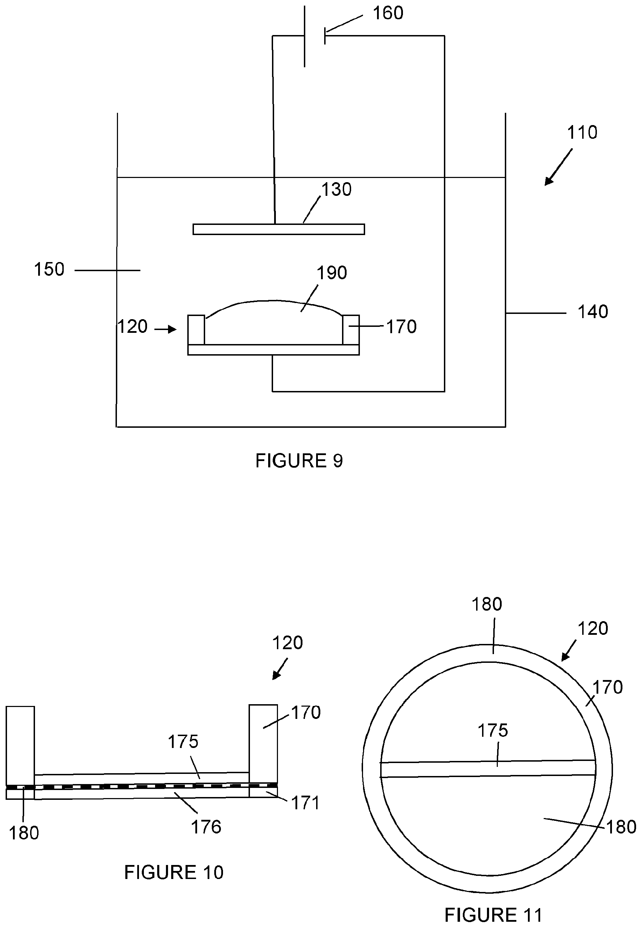

Figure 9 illustrates an electrolysis apparatus 110 configured for use in performing a reduction of a feedstock powder. The apparatus comprises a stainless steel cathode 120 and a carbon anode 130 situated within a housing 140 of an electrolysis cell. The anode 130 is disposed above, and spatially separated from, the cathode 120. In certain embodiments the housing 140 may contain 500 kg of a calcium chloride based molten salt electrolyte 150, the electrolyte comprising CaCl₂ and 0.4 wt % CaO. Both the anode 130 and the cathode 120 are arranged in contact with the molten salt 150. Both the anode 130 and the cathode 120 are coupled to a power supply 160 so that a potential can be applied between the cathode and the anode.

The cathode 120 and the anode 130 are both substantially horizontally oriented, with an upper surface of the cathode 120 facing towards a lower surface of the anode 130.

The cathode 120 incorporates a rim 170 that extends upwards from a perimeter of the cathode and acts as a retaining barrier for a feedstock powder 190 supported on an upper surface of the cathode. The rim 170 is integral with, and formed from the same material as, the cathode. In other embodiments, the rim may be formed from a different material to the cathode, for example from an electrically insulating material.

The structure of the cathode may be seen in more detail in Figure 10 and Figure 11. The rim 170 is in the form of a hoop having a diameter of 30 cm. A first supporting cross-member 175 extends across a diameter of the rim. The cathode also comprises a mesh-supporting member 171, which is in the form of a hoop having the same diameter as the rim 170. The mesh-supporting member has a second supporting cross-member 176 of the same dimensions as the supporting cross-member 175 on the rim 170. A mesh 180 is supported by being sandwiched between the rim 170 and the mesh-supporting member 171 (the mesh 180 is shown as the dotted line in Figure 10). The mesh 180 comprises a stainless steel cloth of mesh-size 100 that is held in tension by the rim 170 and the mesh-supporting member. The cross-member 175 is disposed against a lower surface of the mesh 180 and acts to support the mesh. An upper surface of the mesh 180 acts as the upper surface of the cathode.

The stainless steel cloth forming the mesh 180 is fabricated from 30 micrometre thick wires of 304 grade stainless steel that have been woven to form a cloth having square holes with a 150 micrometre aperture. The mesh size may be varied and should, in general, be of smaller diameter than the mean particle diameter of the feedstock powder that is being reduced. The mesh 180, cross-member 175 and rim 170 that form the cathode are all electrically conductive. In other embodiments, the mesh may be the only electrically conductive component of the cathode.

In use, the feedstock powder may be reduced by applying a potential between the cathode 120 and the anode 130 sufficient to remove oxygen from the feedstock powder 190. The metallic powder products remaining after reduction can be removed and washed to separate the metallic powder from any remaining salt.

### Example 1

As a specific example, a Ti-Al-V alloy was formed using various aspects of the invention disclosed herein. The initial starting oxide powders used to form the feedstock powder for reduction were TiO₂, Al₂O₃ and V₂O₅. The TiO₂ oxide powder had a mean particle size of 1.2 microns. The Al₂O₃ oxide powder had a mean particle size of 8.2 micrometres. The V₂O₅ powder had a mean particle size of 97.7 micrometres. It would be extremely difficult to combine these three oxide powders in a suitable ratio to form an alloy containing low proportions of Al and V, for example a Ti-6Al-4V alloy powder, due to the large disparity between the initial particle sizes of the starting oxides. While large pellets having a desirable ratio of the oxides may be formed, it is clear that the short range composition is unlikely to proximate that required to form a Ti-6Al-4V alloy.

A total of 4800 grams of mixed oxide powder was used. Of this 4800 grams, 4195 grams was TiO₂, 402 grams was Al₂O₃, and 203 grams V₂O₅. This corresponds to a proportion of metallic elements of 88.5% Ti, 7.5% Al, and 4% V. This feedstock was produced as an initial proof of concept. An oxide feedstock powder of this composition was expected to produce, upon reduction by the FFC process, an alloy of composition approximating Ti-6Al-4V. It is noted that the proportion of aluminium in the feedstock powder was deliberately increased above 6% in order to account for losses of aluminium during the reduction process.

The oxide powder was mixed with a liquid to form a slurry having 59.5 % solid oxide. The liquid consisted of an aqueous solution of demineralised water and PVA. The proportion of PVA was dependent on the total oxide loading. Thus, the proportion of PVA was 2.5 wt % with respect to the total oxide loading. The liquid mixture was then subjected to high-shear mixing for 15 minutes at a rotation speed of 6500 rpm. Shear-mixing was achieved using an IKA dispersion mixer model no. G45M.

After shear-mixing the liquid and oxide mixture had formed a suspension of milled oxide particles in the liquid/binder. The particle size of the oxides had been substantially homogenised, with the oxide particles in the suspension having diameters in the region of 2 micrometres or less. This liquid suspension was then subjected to a fluidised-bed spray-granulation process to produce solid oxide particles. A Glatt Procell Labsystem spray-granulator was used to form the metal oxide particles. Process parameters were set such that the fluidising airflow through the apparatus was 150 m³ per hour, the air temperature was 120°C. The liquid suspension was sprayed into the chamber at a spraying pressure of 3 bar and a spray rate of 57 grams per minute. These parameters were selected to provide a mean product particle size within the range of 100 and 200 micrometres.

After spray-granulation the collected oxide particles were heat treated. Heat treatment was carried out in order to remove organic components of the PVA binder and to impart mechanical strength to each individual powder particle. The heat treatment schedule also homogenised the composition of each particle forming a solid solution of the metal oxide mixture.

In order to heat treat the oxide particles produced by spray granulation they were heated to a temperature of 550°C at a rate of 3°C per minute in an electrically heated furnace. The particles were maintained at this temperature for a period of 1 hour to remove traces of the organic binder. The particles were then heated to 1000°C at 3°C per minute and held at that temperature for a further 2 hours before cooling to room temperature. The resulting feedstock powder is illustrated in Figure 4.

Figure 4 illustrates a feedstock powder for reduction to form a Ti-Al-V powder. The feedstock powder was analysed using a Malvern Mastersizer 2000 and found to comprise a plurality of feedstock particles having a mean particle diameter of about 160 micrometres. The D10 particle size is 119 micrometres and the D90 particle size is 225 micrometres. The feedstock powder is substantially spherical and has a mixed oxide composition comprising titanium, aluminium and vanadium.

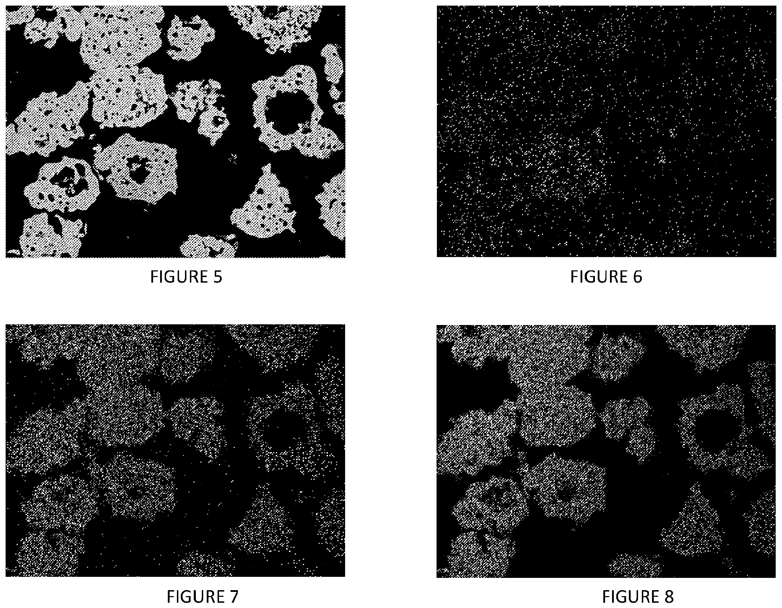

A portion of the feedstock powder was mounted and polished. Figure 5 illustrates an SEM micrograph of the powder. The powder particles can be seen to be substantially the same size and relatively porous. The porosity of the powder may enhance the reduction of the powder using molten salt reduction processes.

An analysis of the distribution of aluminium, vanadium and titanium was carried out using elemental X-ray mapping in the scanning electron microscope (SEM). Figure 6 illustrates the distribution of aluminium within the sample of Figure 5, Figure 7 illustrates the distribution of vanadium in the same sample, and Figure 8 illustrates the distribution of titanium in the same sample. While the distribution of aluminium in Figure 6 is not clear, possibly due to the lower atomic weight of aluminium, it can be seen that the distribution of vanadium and titanium appears to be homogenous within the particles. That is, there are no vanadium rich or vanadium deficient regions in the particles illustrated in Figure 5. Given that the initial vanadium particle size was approximately 100 micrometers it can be seen that the steps of high-shear mixing followed by spray-granulation have produced homogenous feedstock powder particles of mean particle size in the region of 160 micrometres, having the desired elemental distribution.

The feedstock powder was reduced to a metallic alloy powder using apparatus of the type discussed above in relation to Figure 9. Approximately 20 grams of the feedstock powder was arranged on the upper surface of the cathode 20 and in contact with the molten salt 150. The feedstock powder 190 was supported by the mesh 180 of the cathode. The depth of the feedstock powder 190 was approximately 1 centimetre.

The molten salt 50 (CaCl₂ and 0.4 wt% CaO) was maintained at a temperature of 950°C and a potential was applied between the anode and the cathode. Thermal currents and gas lift deflects generated by buoyancy of gases generated at the anode (predominantly CO and CO₂) cause the molten salt to circulate within the cell and generate a flow of molten salt through the bed of feedstock powder. The cell was operated in constant current mode, at a current of 5 amps for a period of 16 hours. After this time the cell was cooled and the cathode was removed and washed to free salt from the reduced feedstock powder.

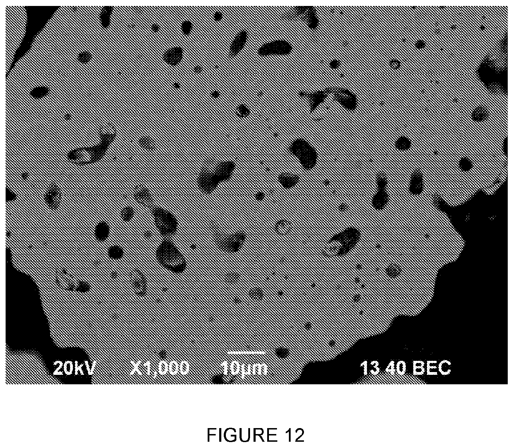

The reduced feedstock powder was removed from the cathode as a friable lump of metallic alloy powder particles. The lumps were crushed in an agate pestle and mortar and the material separated out into individual powder particles. These particles were then dried and analysed. Analysis revealed the powder particles to be a homogenous titanium alloy having a composition of approximately Ti-6Al-6V. Figure 12 is a SEM micrograph showing one of the metallic powder particles. This initial trial shows that, by varying the oxide ratios or species used to form the feedstock, common commercial alloys such as Ti-6Al-4V or Ti-6Al-6V-2Sn can be produced using embodiments of this invention.

### Example 2

As a further specific example, a titanium-aluminide intermetallic (Ti-Al-Nb-Cr intermetallic) was formed using various aspects of the invention disclosed herein. The initial starting oxide powders used to form the feedstock powder for reduction were TiO₂, Al₂O₃, Nb₂O₅ and Cr₂O₃. The TiO₂ oxide powder had a mean particle size of 1.2 microns. The Al₂O₃ oxide powder had a mean particle size of 8.2 micrometres. The Nb₂O₅ powder had a mean particle size of 0.5-2 micrometres, and the Cr₂O₃ powder powder had a mean particle size of 1-5 micrometres.

A total of 5000 grams of mixed oxide powder was used. Of this total, 2861.4 grams was TiO₂, 1826.7 grams was Al₂O₃, 198.4 grams was Nb₂O₅, and 113.5 grams was Cr₂O₃.

The oxide powder was mixed with an aqueous solution of demineralised water and PVA to form a slurry having 59.5 % solid oxide. The slurry was then subjected to high-shear mixing and spray granulation as described in relation to Example 1. The spray granulation parameters were selected to provide a particle size distribution within the range of 100 and 250 micrometres. The product of spray granulation was a free-flowing powder of grey-greenish granules.

After spray-granulation the collected oxide particles were heat treated to form a feedstock powder as described above in relation to Example 1. The feedstock powder was then reduced using the reduction process described in relation to Example 1. The reduced powder was then collected and washed. SEM-EDX analysis of a number of powder particles revealed a metallic alloy powder a mean composition of 45.46 atomic % Al, 50.23 atomic % Ti, 2.09 atomic % Cr, and 2.22 atomic percent Nb.

### Example 3

As a further specific example, a titanium-tantalum alloy (Ti-Ta alloy) was formed using various aspects of the invention disclosed herein. The initial starting oxide powders used to form the feedstock powder for reduction were TiO₂ and Ta₂O₅. The TiO₂ oxide powder had a mean particle size of 1.2 microns. The Ta₂O₅ oxide powder agglomerate had a mean particle size of 300 micrometres.

A total of 5000 grams of mixed oxide powder was used. Of this total, 3806.3 grams was TiO₂ and 1193.7 grams was Ta₂O₅.

The oxide powder was mixed with an aqueous solution of demineralised water and PVA to form a slurry having 53.2 % solid oxide. The slurry was then subjected to high-shear mixing and spray granulation as described in relation to Example 1. The spray granulation parameters were selected to provide a particle size distribution within the range of 100 and 250 micrometres. The product of spray granulation was a free-flowing powder of grey-greenish granules.

After spray-granulation the collected oxide particles were heat treated to form a feedstock powder as described above in relation to Example 1. The feedstock powder was then reduced using the reduction process described in relation to Example 1. The reduced powder was then collected and washed. SEM-EDX analysis of a number of powder particles revealed a metallic alloy powder a mean composition of 70.19 weight % Ti and 29.81 weight % Ta.

### Example 4

As a further specific example, a tantalum-tungsten alloy (Ta-W alloy) was formed using various aspects of the invention disclosed herein. The initial starting oxide powders used to form the feedstock powder for reduction were Ta₂O₅ and W₂O₃. The Ta₂O₅ oxide powder agglomerate had a mean particle size of 300 micrometres. The WO₃ oxide powder had a particle size distribution of 0.5-5 micrometres.

A total of 5000 grams of mixed oxide powder was used. Of this total, 4871 grams was Ta₂O₅ and 129 grams was WO₃.

The oxide powder was mixed with an aqueous solution of demineralised water and PVA to form a slurry having 59.5 % solid oxide. The slurry was then subjected to high-shear mixing and spray granulation as described in relation to Example 1. The spray granulation parameters were selected to provide a particle size distribution within the range of 100 and 250 micrometres. The product of spray granulation was a free-flowing powder of grey-greenish granules.

After spray-granulation the collected oxide particles were heat treated to form a feedstock powder as described above in relation to Example 1. The feedstock powder was then reduced using the reduction process described in relation to Example 1. The reduced powder was then collected and washed. SEM-EDX analysis of a number of powder particles revealed a metallic alloy powder a mean composition of 93.61 weight % Ta and 6.39 weight % W.

### Example 5

As a further specific example, a tantalum-aluminium alloy (Ta-Al alloy) was formed using various aspects of the invention disclosed herein. The initial starting oxide powders used to form the feedstock powder for reduction were Ta₂O₅ and Al₂O₃. The Ta₂O₅ oxide powder agglomerate had a mean particle size of 300 micrometres. The Al₂O₃ oxide powder agglomerate had a mean particle size of 120 micrometres.

A total of 5000 grams of mixed oxide powder was used. Of this total, 4847 grams was Ta₂O₅ and 153 grams was Al₂O₃.

The oxide powder was mixed with an aqueous solution of demineralised water and PVA to form a slurry having 59.5 % solid oxide. The slurry was then subjected to high-shear mixing and spray granulation as described in relation to Example 1. The spray granulation parameters were selected to provide a particle size distribution within the range of 100 and 250 micrometres. The product of spray granulation was a free-flowing powder of grey-greenish granules.

After spray-granulation the collected oxide particles were heat treated to form a feedstock powder as described above in relation to Example 1. The feedstock powder was then reduced using the reduction process described in relation to Example 1. The reduced powder was then collected and washed. SEM-EDX analysis of a number of powder particles revealed a metallic alloy powder a mean composition of 97.84 weight % Ta and 2.16 weight % Al.

## Claims

1. A method of producing metal, the method comprising the steps of:
forming a non-metallic feedstock powder suitable for reduction to metal, the step of forming a non-metallic feedstock powder comprising:
combining a liquid with solid metal oxide particles to form a mixture, subjecting the mixture to high-shear mixing to form a liquid suspension of metal oxide and the liquid, and
drying the liquid suspension using a fluidised-bed spray-granulation process to grow a plurality of particles to form the non-metallic feedstock powder, and
reducing the non-metallic feedstock powder to form the metal.

2. A method according to claim 1 in which, the step of drying the liquid suspension comprises the further steps of,
spraying a portion of the liquid suspension into a heated chamber of a fluidised-bed spray-granulation apparatus such that liquid is removed from individual droplets of the suspension to form a plurality of seed particles, maintaining the plurality of seed particles within the heated chamber by means of a fluidising gas stream, and
spraying further portions of the liquid suspension into the heated chamber, droplets of the liquid suspension successively adsorbing to and drying on the plurality of seed particles, thereby growing particles to form the non-metallic feedstock powder.

3. A method according to claim 1 or 2 in which the liquid comprises water and an organic binder, preferably in which the binder is an aqueous solution of polyvinyl alcohol (PVA), polyvinylpyrrolidone (PVP), or hydroxyyethylcellulose (HEC).

4. A method according to any preceding claim in which a first set of metal oxide particles and a second set of metal oxide particles are combined with the liquid to form the mixture, the first set of metal oxide particles having a different composition to the second set of metal oxide particles.

5. A method according to claim 4 in which the first set of metal oxide particles and the second set of metal oxide particles have a different mean particle size, preferably in which the first set of metal oxide particles and the second set of metal oxide particles have mean particle sizes that differ by greater than a factor of 2, or greater than a factor of 10, or by greater than a factor of 100.

6. A method according to claim 4 or 5 in which three or more sets of metal oxide particles are combined with the liquid to form the mixture, each of the three or more sets having a different composition.

7. A method according to any preceding claim in which the process of forming the feedstock powder is controlled such that the feedstock powder has a predetermined mean particle diameter, preferably in which the predetermined mean particle diameter is between 10 micrometres and 10 millimetres, or between 50 micrometres and 5 millimetres, or between 50 micrometres and 200 micrometres.

8. A method according to any preceding claim in which the process of forming the feedstock powder is controlled such that the feedstock powder has a particle size distribution of less than 100 micrometres between a D10 diameter and a D90 diameter, preferably a particle size distribution of 50 micrometres or less,
and/or in which high-shear mixing is performed using a rotor rotating in excess of 5000 rpm, preferably in excess of 6000 rpm, more preferably about 6500 rpm,
and/or in which the sum of all metal oxide particles combined with the liquid to form the mixture make up between 50 weight % and 70 weight % of the mixture,
and/or in which the process of forming the feedstock powder comprises the step of heat treating the plurality of feedstock particles to impart mechanical strength and/or chemical homogeneity to each particle, preferably heat treating at a temperature of greater than 900°C, more preferably between about 1000°C and 1400°C.

9. A method according to any preceding claim in which the reduction of the non-metallic feedstock powder is effected by electrolytic reduction of the feedstock powder in contact with a molten salt.

10. A method according to claim 9 in which the metal produced is a titanium-aluminium-vanadium alloy, particles of titanium oxide, aluminium oxide, and vanadium oxide being combined with the liquid to form the mixture
or in which the metal produced is a titanium-aluminium-niobium-chromium intermetallic, particles of titanium oxide, aluminium oxide, niobium oxide and chromium oxide being combined with the liquid to form the mixture,
or in which the metal produced is a titanium-tantalum alloy, particles of titanium oxide and tantalum oxide being combined with the liquid to form the mixture
or in which the metal produced is a tantalum-tungsten alloy, particles of tantalum oxide and tungsten oxide being combined with the liquid to form the mixture
or in which the metal produced is a tantalum-aluminium alloy, particles of tantalum oxide and aluminium oxide being combined with the liquid to form the mixture.

## Patentansprüche

1. Metallproduktionsverfahren, wobei das Verfahren die folgenden Schritte aufweist:
Bilden eines nichtmetallischen Ausgangspulvers, das zur Reduktion zu Metall geeignet ist, wobei der Schritt des Bildens eines nichtmetallischen Ausgangspulvers Folgendes aufweist:
Vermengen einer Flüssigkeit mit festen Metalloxidteilchen zum Bilden eines Gemischs,
Unterziehen des Gemischs einem Mischen mit hoher Scherkraft zum Bilden einer flüssigen Suspension aus Metalloxid und der Flüssigkeit und
Trocknen der flüssigen Suspension unter Verwendung eines Wirbelschicht-Sprühgranulationsprozesses zum Züchten einer Vielzahl von Teilchen zum Bilden des nichtmetallischen Ausgangspulvers und
Reduzieren des nichtmetallischen Ausgangspulvers zum Bilden des Metalls.

2. Verfahren nach Anspruch 1, bei dem der Schritt des Trocknens der flüssigen Suspension die folgenden weiteren Schritte aufweist:
Sprühen eines Teils der flüssigen Suspension in eine beheizte Kammer einer Wirbelschicht-Sprühgranulationsvorrichtung, so dass Flüssigkeit aus einzelnen Tröpfchen der Suspension entfernt wird, um eine Vielzahl von Keimteilchen zu bilden,
Halten der Vielzahl von Keimteilchen in der beheizten Kammer mittels eines Wirbelgasstroms und
Sprühen weiterer Teile der flüssigen Suspension in die beheizte Kammer, wobei Tröpfchen der flüssigen Suspension nacheinander an bzw. auf der Vielzahl von Keimteilchen adsorbiert werden und trocknen, wodurch Teilchen zum Bilden des nichtmetallischen Ausgangspulvers gezüchtet werden.

3. Verfahren nach Anspruch 1 oder 2, bei dem die Flüssigkeit Wasser und einen organischen Binder aufweist, vorzugsweise bei dem der Binder eine wässrige Suspension von Polyvinylalkohol (PVA), Polyvinylpyrrolidon (PVP) oder Hydroxyethylcellulose (HEC) ist.

4. Verfahren nach einem der vorhergehenden Ansprüche, bei dem ein erster Satz Metalloxidteilchen und ein zweiter Satz Metalloxidteilchen zum Bilden des Gemischs mit der Flüssigkeit vermengt werden, wobei der erste Satz Metalloxidteilchen eine andere Zusammensetzung als der zweite Satz Metalloxidteilchen hat.

5. Verfahren nach Anspruch 4, bei dem erste Satz Metalloxidteilchen und der zweite Satz Metalloxidteilchen eine verschiedene mittlere Teilchengröße aufweisen, vorzugsweise bei dem der erste Satz Metalloxidteilchen und der zweite Satz Metalloxidteilchen mittlere Teilchengrößen aufweisen, die sich um mehr als einen Faktor 2 oder mehr als einen Faktor 10 oder um mehr als einen Faktor 100 voneinander unterscheiden.

6. Verfahren nach Anspruch 4 oder 5, bei dem drei oder mehr Sätze Metalloxidteilchen zum Bilden des Gemischs mit der Flüssigkeit vermengt werden, wobei jeder der drei oder mehr Sätze eine andere Zusammensetzung hat.

7. Verfahren nach einem der vorhergehenden Ansprüche, bei dem der Prozess des Bildens von Ausgangspulver so geregelt wird, dass das Ausgangspulver einen vorbestimmten mittleren Teilchendurchmesser hat, vorzugsweise bei dem der vorbestimmte mittlere Teilchendurchmesser zwischen 10 Mikrometer und 10 Millimeter oder zwischen 50 Mikrometer und 5 Millimeter oder zwischen 50 Mikrometer und 200 Mikrometer beträgt.

8. Verfahren nach einem der vorhergehenden Ansprüche, bei dem der Prozess des Bildens von Ausgangspulver so geregelt wird, dass das Ausgangspulver eine Teilchengrößenverteilung von weniger als 100 Mikrometer zwischen einem D10-Durchmesser und einem D90-Durchmesser hat, vorzugsweise eine Teilchengrößenverteilung von 50 Mikrometer oder weniger,
und/oder bei dem Mischen mit hoher Scherkraft unter Verwendung eines mit über 5000 U/min, vorzugsweise über 6000 U/min, mehr vorzugsweise etwa 6500 U/min rotierenden Rotors durchgeführt wird
und/oder bei dem die Summe aller zum Bilden des Gemischs mit der Flüssigkeit vermengten Metalloxidteilchen zwischen 50 Gewichts-% und 70 Gewichts-% des Gemischs ausmacht,
und/oder bei dem der Prozess des Bildens des Ausgangspulvers den Schritt des Wärmebehandelns der Vielzahl von Ausgangsmaterialteilchen, um jedem Teilchen mechanische Festigkeit und/oder chemische Homogenität zu verleihen, vorzugsweise des Wärmebehandelns bei einer Temperatur von über 900 °C, mehr vorzugsweise zwischen etwa 1000 °C und 1400 °C, aufweist.

9. Verfahren nach einem der vorhergehenden Ansprüche, bei dem die Reduktion des nichtmetallischen Ausgangspulvers durch elektrolytische Reduktion des Ausgangspulvers in Kontakt mit einer Salzschmelze bewirkt wird.

10. Verfahren nach Anspruch 9, bei dem das hergestellte Metall eine Titan-Aluminium-Vanadium-Legierung ist, wobei zum Bilden des Gemischs Titanoxid-, Aluminiumoxid- und Vanadiumoxidteilchen mit der Flüssigkeit vermengt werden,
oder bei dem das hergestellte Metall eine intermetallische Titan-Aluminium-Niob-Chrom-Verbindung ist, wobei zum Bilden des Gemischs Titanoxid-, Aluminiumoxid-, Nioboxid- und Chromoxidteilchen mit der Flüssigkeit vermengt werden,
oder bei dem das hergestellte Metall eine Titan-Tantal-Legierung ist, wobei zum Bilden des Gemischs Titanoxid- und Tantaloxidteilchen mit der Flüssigkeit vermengt werden,
oder bei dem das hergestellte Metall eine Tantal-WolframLegierung ist, wobei zum Bilden des Gemischs Tantaloxid- und Wolframoxidteilchen mit der Flüssigkeit vermengt werden,
oder bei dem das hergestellte Metall eine Tantal-AluminiumLegierung ist, wobei zum Bilden des Gemischs Tantaloxid- und Aluminiumoxidteilchen mit der Flüssigkeit vermengt werden.

## Revendications

1. Procédé de production de métal, le procédé comprenant les étapes suivantes :
la formation d'une poudre non métallique appropriée pour la réduction en métal, l'étape de formation d'une poudre de charge non métallique consistant à
combiner un liquide avec des particules d'oxyde métallique solide pour former un mélange,
soumettre le mélange à un mélange sous cisaillement élevé pour former une suspension liquide d'oxyde métallique et du liquide, et
sécher la suspension liquide à l'aide d'un processus de granulation par pulvérisation en lit fluidisé pour faire croître une pluralité de particules afin de former la poudre de charge non métallique, et
la réduction de la poudre de charge non métallique pour former le métal.

2. Procédé selon la revendication 1 dans lequel l'étape de séchage de la suspension liquide comprend les étapes supplémentaires consistant à,
pulvériser une partie de la suspension liquide dans une chambre chauffée d'un appareil de granulation par pulvérisation en lit fluidisé de telle sorte que le liquide soit éliminé de gouttelettes individuelles de la suspension pour former une pluralité de particules germes,
maintenir la pluralité de particules germes à l'intérieur de la chambre chauffée au moyen d'un flux de gaz de fluidisation, et
pulvériser d'autres parties de la suspension liquide dans la chambre chauffée, les gouttelettes de la suspension liquide s'adsorbant et se séchant successivement sur la pluralité de particules germes, faisant croître ainsi des particules pour former la poudre de charge non métallique .

3. Procédé selon la revendication 1 ou 2 dans lequel le liquide comprend de l'eau et un liant organique, de préférence dans lequel le liant est une solution aqueuse d'alcool polyvinylique (PVA), de polyvinylpyrrolidone (PVP), ou d'hydroxyéthyl cellulose (HEC).

4. Procédé selon n'importe quelle revendication précédente dans lequel un premier ensemble de particules d'oxyde métallique et un deuxième ensemble de particules d'oxyde métallique sont combinés avec le liquide pour former le mélange, le premier ensemble de particules d'oxyde métallique ayant une combinaison différente de celle du deuxième ensemble de particules d'oxyde métallique.

5. Procédé selon la revendication 4 dans lequel le premier ensemble de particules d'oxyde métallique et le deuxième ensemble de particules d'oxyde métallique ont des grosseurs moyennes de particules différentes, de préférence dans lequel le premier ensemble de particules d'oxyde métallique et le deuxième ensemble de particules d'oxyde métallique ont des grosseurs moyennes de particules qui diffèrent par plus d'un facteur de 2, ou par plus d'un facteur de 10, ou par plus d'un facteur de 100.

6. Procédé selon la revendication 4 ou 5 dans lequel trois ou plusieurs ensembles de particules d'oxyde métallique sont combinés avec le liquide pour former le mélange, chacun des trois ou plusieurs ensembles ayant une composition différente.

7. Procédé selon n'importe quelle revendication précédente dans lequel le processus de formation de la poudre de charge est régulé de telle sorte que la poudre de charge ait un diamètre moyen de particules prédéterminé, de préférence dans lequel le diamètre moyen de particules prédéterminé est compris entre 10 micromètres et 10 millimètres, ou entre 50 micromètres et 5 millimètres, ou entre 50 micromètres et 200 micromètres.

8. Procédé selon n'importe quelle revendication précédente dans lequel le processus de formation de la poudre de charge est régulé de telle sorte que la poudre de charge ait une distribution granulométrique de moins de 100 micromètres entre un diamètre D10 et un diamètre D90, de préférence une distribution granulométrique de 50 micromètres ou moins,
et/ou dans lequel un mixage sous cisaillement élevé est réalisé à l'aide d'un rotor tournant à plus de 5000 tr/min, de préférence à plus de 6000 tr/min, idéalement à environ 6500 tr/min,
et/ou dans lequel la somme de toutes les particules d'oxyde métallique combinées avec le liquide pour former le mélange constitue entre 50 % en poids et 70 % en poids du mélange,
et/ou dans lequel le processus de formation de la poudre de charge comprend l'étape de traitement thermique de la pluralité de particules de charge pour conférer une force mécanique et/ou une homogénéité chimique à chaque particule, de préférence un traitement thermique à une température de plus de 900 °C, d'une manière davantage préférée entre environ 1000 °C et 1400 °C.

9. Procédé selon n'importe quelle revendication précédente dans lequel la réduction de la poudre de charge non métallique est effectuée par réduction électrolytique de la poudre de charge en contact avec un sel fondu.

10. Procédé selon la revendication 9 dans lequel le métal produit est un alliage de titane-aluminium-vanadium, des particules d'oxyde de titane, d'oxyde d'aluminium et d'oxyde de vanadium étant combinées avec le liquide pour former le mélange
ou dans lequel le métal produit est un composé intermétallique titane-aluminium-niobium-chrome, des particules d'oxyde de titane, d'oxyde d'aluminium, d'oxyde de niobium et d'oxyde de chrome étant combinées avec le liquide pour former le mélange,
ou dans lequel le métal produit est un alliage de titane-tantale, des particules d'oxyde de titane et d'oxyde de tantale étant combinées avec le liquide pour former le mélange
ou dans lequel le métal produit est un alliage de tantale-tungstène, des particules d'oxyde de tantale et d'oxyde de tungstène étant combinées avec le liquide pour former le mélange
ou dans lequel le métal produit est un alliage de tantale-aluminium, des particules d'oxyde de tantale et d'oxyde d'aluminium étant combinées avec le liquide pour former le mélange.
